# EUROPEAN PATENT APPLICATION

(11) **EP 4 238 419 A1**
(43) Date of publication of application: **06.09.2023**
(21) Application number: 21885415.6
(22) Date of filing: 26.10.2021
(51) Int. Cl.: A01N 65/03, A01N 25/02

(54) **INDUSTRIAL-SCALE PROCESS FOR OBTAINING A CONCENTRATED EXTRACT OF BIOPESTICIDAL COMPOUNDS FROM MICROALGAE AND/OR CYANOBACTERIA, RESULTING EXTRACT, AND USE THEREOF**

(30) Priority: 26.10.2020 ES 202031068
(71) Applicant: Biorizon Biotech, S.L., 04130 El Alquián (Almería) (ES)
(72) Inventor: NAVARRO LÓPEZ, Elvira, 04120 ALMERIA (ES); MOLINA GRIMA, Emilio, 04120 ALMERIA (ES); ACIEN FERNÁNDEZ, Francisco, Gabriel, 04120 ALMERIA (ES); FERNÁNDEZ SEVILLA, José, María, 04120 ALMERIA (ES); CERÓN GARCÍA, María del Carmen, 04120 ALMERIA (ES); ROJAS CRESPO, Elisa, 04131 ALMERIA (ES); GARCÍA LÓPEZ, Juan, José, 04131 ALMERIA (ES); POZO DENGRA, Joaquín, 04131 ALMERIA (ES)
(74) Representative: Herrero & Asociados, S.L.
(86) International application number: PCT/ES2021/070775
(87) International publication number: WO 2022/090601

(57) **Abstract**

The invention provides a process for extracting compounds with inhibitory activity of the growth of phytopathogenic microorganisms from biomass of microalgae and/or cyanobacteria, the extract thus obtained, and its use as a biopesticide in agriculture. The process essentially comprises obtaining a biomass suspension of microalgae and/or cyanobacteria at a determined solids concentration; releasing cell content from biomass by high-pressure homogenization, operated at moderate pressure; extracting the biopesticide components using a mixture of organic solvent, with a polarity between 0 and 9, and water; and separating the extract containing the biopesticide components from the residual microalgal and/or cyanobacterial biomass by physical methods.

## Description

### TECHNICAL FIELD OF THE INVENTION

The present invention falls within the field of the production of biopesticide products for agriculture.

More specifically, the invention provides a process for the extraction of compounds with inhibitory activity of the growth of phytopathogenic microorganisms from biomass of microalgae and/or cyanobacteria, with application both in extensive and intensive agriculture. Consequently, the invention also refers to the use of the extract obtained by said process as a biopesticide in agriculture.

### BACKGROUND OF THE INVENTION

The environmental impact of chemically synthesized pesticides, as opposed to biopesticides, has become a major concern, not only because of the persistence of the chemicals in the upper layer of the soil or because of their leaching into groundwater, but also because of their unwanted effects on inhabited areas that these volatilized pesticides can reach, being already relevant, in addition to the environmental impact on flora and fauna, also the toxic effect of exposure to this type of chemicals on human health.

For this reason, the use of natural compounds for pest control, also called biopesticides, is a viable, sustainable and effective alternative to the massive use of chemical synthesis pesticides.

Biopesticides are products obtained from live microorganisms or natural products, which are used to prevent, repel, destroy or mitigate any pest or agent that causes damage to plant crops, humans or other animals. These pests include insects, animals, unwanted plants, microorganisms (bacteria, fungi, viruses) and prions (proteins that can act as infectious agents) (Chandler et al., "The development, regulation and use of biopesticides for integrated pest management", Phil. Trans. R. Soc. B 12 July 2011 vol. 366 no. 1573 1987 to 1998 2011; Carlos Hernández and Gamboa-Angulo, "Metabolites from freshwater aquatic microalgae and fungi as potential natural pesticides", Phytochemistry Reviews, 2011).

The potential of microalgae and cyanobacteria, as a source for obtaining various products of great interest for agriculture, has gained relevance in recent decades. The incidence of diseases caused by phytopathogenic fungi and bacteria is an obvious problem that generates great concern. In this sense, microalgae and cyanobacteria have positioned themselves as sources of biopesticide compounds with potential use in agriculture. Both groups of photosynthetic organisms are represented by a great variety of species, adapted to very diverse ecological habitats. In order to survive in a highly competitive environment, often suffering large fluctuations in physical and chemical parameters, they have developed defensive and adaptive strategies, including the synthesis of numerous compounds obtained by different metabolic pathways.

Some notable compounds synthesized by microalgae and/or cyanobacteria are: substances with antioxidant activity, such as carotenoids and polyphenols; plant growth promoting compounds, such as phytohormones and sterols; and substances with antimicrobial activity, such as fatty acids or polysaccharides. Many of these metabolites have very specific and complex chemical structures not found among terrestrial organisms, making it difficult to reproduce them by chemical synthesis (Falaise et al., "Antimicrobial Compounds from Eukaryotic Microalgae against Human Pathogens and Diseases in Aquaculture", Mar Drugs. 2016 Sep 2;14(9), 2016*;* Michalak & Chojnacka, "Algal extracts: Technology and advances," Engineering in Life Sciences, Vol. 14, 2014*;* Najdenski et al., "Antibacterial and antifungal activities of selected microalgae and cyanobacteria", Food Science and Technology, Col. 48, 2013*;* Suárez-Estrella et al., "Biological control of plant pathogens by microorganisms isolated from agro-industrialcomposts", Biological Control, 2013).

Thus, thanks to their enormous biodiversity, ease of cultivation, rapid growth and metabolism control, microalgae and cyanobacteria are increasingly used to produce bioactive compounds with different applications, being used both in the form of microalgae extracts and purified metabolites (Elarroussi et al. al, "Microalgae polysaccharides a promising plant growth biostimulant", Journal of Algal Biomass Utilization, 2016).

Microalgae and cyanobacteria have proven to be effective against a wide variety of phytopathogenic agents, in general bacteria, fungi and nematodes. This biocidal activity is mainly due to the production of hydrolytic enzymes and other compounds that cause disruption of the cytoplasmic membrane, inactivation of enzymes, inhibition of protein synthesis, etc. (Renuka et al., "Microalgae as multi-functional options in modern agriculture: current trends, prospects and challenges", Biotechnology Advances 36(4), 2018). It has been seen that phenolic compounds, such as flavonoids or coumarins, are the main metabolites produced by microalgae that present a broad spectrum of antimicrobial activity (Pina-Pérez et al., "Antimicrobial potential of macro and microalgae against pathogenic and spoilage microorganisms in food", food Chemistry, 2017*).* Other compounds isolated from microalgae that present biocidal properties are terpenes, polysaccharides, pigments such as chlorophyll and carotenoids, and fatty acids, such as propanoic acid and butanoic acid (Hernández-Carlos and Gamboa-Angulo, 2011; Michalak and Chojnacka, 2014*).*

For example, document CN107135829A describes an extract of brown algae capable of reducing the concentration of pesticide residues in plants and trees. Document CN103114003A describes a disinfectant prepared from enzyme complexes from marine organisms, phosphatidyl dehydrogenase, enzymes from marine microalgae and marine pyrrole alkaloids for the same purpose.

The authors of the invention, after significant experimental work, have developed a new method for extracting biopesticide compounds for agricultural use from microalgae and/or cyanobacteria biomass.

The novelty of the developed process is based on the fact that it is an industrial process, scalable and achievable at a reasonable cost, unlike the methods described in the state of the art, which are analytical methods and, as such, pursue complete quantification/extraction of biopesticides regardless of scale or cost.

Thus, for example, in the document by Devi K M et al. ("Antimicrobial activities of freshwater cyanobacterium", Nostoc sp. from tamdil wetland of mizoram, India: An identification of bioactive compounds by GC-MS. International Journal of Pharmaceutical Sciences and Research, 2016, vol. 7 (3), pages 1179 - 1191, DOI:10.13040/IJPSR.0975-8232.7(3).1179-91) describes an analytical method for extracting compounds from biomass (cyanobacteria), using pure solvents or their mixtures, and testing the extracts once the extracting agent is completely removed. It is not in any case an industrializable method, since the amounts of solvent used are very high, it requires a step of purification of the extract by chromatography, as well as the use of pure solvents that extract different compounds, because they have very different polarities from those of the present invention. Furthermore, they inevitably require a solvent evaporation step which is not necessary in this invention.

In the document by Salem et al. ("Antimicrobial activity of microalgal extracts with emphasize on Nostoc sp". Life Science Journal, 2014, vol. 11 (12), pages 752-758*)* also describes an analytical method for preparing microalgae extracts using pure acetone and methanol. It also includes a breaking step by grinding after freezing with liquid nitrogen, as well as the elimination of the solvent by evaporation. Once again, it is an industrially unfeasible method that also extracts different compounds based on the different extraction conditions.

In the article by Saber A et al. (Insecticidal prospects of algal and cyanobacterial extracts against the cotton leafworm Spodoptera littoralis. Vie et Milieu 2018, vol. 68 (4), pages 199-212, ISSN 0240-8759) reports an analytical extraction method from microalgae biomass, which uses pure solvents, very long contact times, of several hours, much excess amounts of solvent to biomass, and breaking methods only applicable on a laboratory scale.

On the other hand, in the state of the art, microalgae and cyanobacteria are always harvested wet and subsequently dried because, otherwise, the biomass is rapidly corrupted. For this reason, the methods described in the state of the art start with dry biomass, which is subjected to humidity just before beginning the extraction processes.

The authors of the invention have thus had to overcome numerous technical difficulties in order to be able to develop a method that allows the extraction of biopesticide compounds from microalgae and/or cyanobacteria on an industrial scale. The proposed method avoids carrying out a drying step after harvesting the biomass, which entails significant economic and energy expenditure at an industrial level, and uses very low amounts of solvent, mixed with water, of optimized polarity, which preferably extract the compounds of interest, instead of all those contained in the biomass indiscriminately.

This process is robust and scalable and can be carried out in different locations, since it does not depend on a specific type of microalgae or cyanobacteria, but is adaptable to any species. In addition, it is a cost-competitive process, simple in its methodology and does not require a large infrastructure or equipment.

### DESCRIPTION OF THE INVENTION

As previously indicated, the present invention provides a process on an industrial scale for the extraction of compounds with growth-inhibiting activity of phytopathogenic microorganisms, generally referred to herein as biopesticide compounds, from biomass of microalgae and/or cyanobacteria.

Thus, a main aspect of the invention contemplates a process for obtaining, at an industrial level, an extract concentrated in biopesticide compounds, from microalgae and/or cyanobacteria, which comprises the following steps:
i) Providing a biomass of microalgae and/or cyanobacteria,
ii) Concentrating or resuspending the biomass provided in step i) in a liquid medium until reaching a solids concentration between 60 and 200 g/L,
iii) Releasing the cell content of the biomass obtained in step ii) by high-pressure homogenization, operated at a moderate pressure, between 7.10⁷ and 1·10⁸ Pa, for an optimized time,
iv) Extracting the biopesticide components released in step iii) in a stirred tank, using a mixture of an organic solvent, with a polarity between 0 and 9, and water, with a solvent concentration between 3 and 44% (v/v), at an agitation between 50 and 150 rpm, for a time between 0.5 and 6 hours, and at a temperature between 20 °C and 65 °C, and
v) Separating by physical means the extract containing the biopesticide components obtained in step iv).

The origin of the biomass of microalgae and/or cyanobacteria, used as a starting product in the process of the invention, is not critical, and can be obtained from its cultivation for this purpose in clean water and with chemical fertilizers, or from processes crops in which wastewater and/or treatment of agro-industrial effluents, animal slurry, organic waste digestate, or leachate from agricultural waste is used as a nutrient source. In this context, microalgae and/or cyanobacteria can be produced in any type of photobioreactor, either under autotrophic, mixotrophic or heterotrophic conditions.

The characteristics of the process of the invention have made it possible to connect the harvesting of the biomass with its processing, being able, unlike the processes described in the state of the art, to start from both wet biomass and dry biomass, since it does not require a drying step, which means significant energy and economic savings.

In the present invention, the expression "wet biomass" refers to the biomass that comes directly from harvesting and that is in suspension at a certain concentration. It is therefore a paste of microalgae and/or cyanobacteria made up of the biomass itself and a liquid medium, generally the aqueous medium that comes from the culture medium, although it can also be water from washing the medium, or any other liquid phase, in variable proportions such that they give it a degree of humidity.

In a particular embodiment of the invention, it starts from harvesting approximately between 5% and 60% of the volume of a photobioreactor that contains a variable concentration of microalgae and/or cyanobacteria biomass in suspension of between 0.1 g/L and 20 g/L.

The wet biomass, coming directly from the harvest, undergoes a concentration step (ii) to reach the required solids concentration. In a preferred embodiment, the concentration of the wet biomass is carried out by means of centrifugation or membrane filtration up to the required concentration of between 60 and 200 g/L.

Optionally, the wet biomass can be further pre-concentrated by other physical methods, in particular by a sedimentation step or by flocculation, to a solids concentration of between 10 and 40 g/L. In the case of adding a flocculating agent, it is preferably selected from among salts of Fe and Al, as well as polyelectrolytes of a cationic nature, in a concentration between 0.1 and 20% (w/v).

In case of starting from dry biomass, said biomass will have to be resuspended in a liquid medium, before step iii) of cell rupture using high pressures, until reaching the previously indicated concentration (60 to 200 g/L).

The extraction of the biopesticide compounds is always done, therefore, from biomass with a solids concentration of between 60 and 200 g/L, after an optimized process of pretreatment of the biomass to achieve cell breakage of the microalgae and/or cyanobacteria.

The authors of the invention have developed a breaking process by means of high-pressure homogenization, but operated at moderate pressure, for an optimized time. This process is based on a system in which the flow of wet biomass enters a chamber, where it is subjected to pressures between 7·10⁷ and 1·10⁸ Pa, causing said pressure to break the cells. The time of this process can be optimized since the same fluid consisting of the wet biomass can pass through the chamber one or several times, if necessary, preferably contemplating in the present invention between 1 and 3 passes through the chamber. This type of process is industrial and is applied in other fields, but never in laboratory-scale methods, such as those described in the bibliography, which use ball or mortar mills (since they require starting from dry biomass) and are not industrializable methods.

Step iv), for the extraction of the biopesticide compounds, is carried out in a stirred and heated system, such as a heated stirred tank reactor. As extracting agent, an organic solvent completely miscible with water (polarity between 0 to 9) is used. In preferred embodiments, the organic solvent used in step iv) has a polarity index between 3.9 and 7.2, and is selected from the group consisting of acetone, acetonitrile, ethylene glycol, isopropanol, methanol, methyl ethyl ketone, nitromethane or tetrahydrofuran or combinations thereof.

Step v) of separating the extract from the residual biomass of microalgae and/or cyanobacteria, can be carried out by any suitable physical separation method, for example, by centrifugation or filtration.

The main advantages derived from the process of the present invention are:
- It is applied to wet biomass without the need to be dried, since the method allows the harvesting to be connected with the biomass processing. Most, if not all, laboratory methods use dry biomass as a starting point. Biomass drying is expensive and unsustainable at an industrial level, in addition to damaging some compounds of interest. However, the process of the invention can also be carried out starting from dry biomass.
- Biocompatible solvents, such as acetone, are used so that the process can be carried out at an industrial level and current regulations are complied with. The analytical methods can use this or other non-biocompatible solvents, some of them can be toxic or explosive when handled in large quantities, so their industrial use is not allowed.
- The extraction is done after an optimized biomass pretreatment process.
- The proportion of solvent, time and extraction conditions have been optimized to make it feasible and adjusted in cost at an industrial level. In analytical methods the proportion of solvent is always in great excess, as well as the extraction time to guarantee the complete extraction of the compounds of interest. The extraction conditions are also "extreme" to prioritize the extraction of the target compounds regardless of the cost that this entails or the deterioration that it produces in the rest of the biomass.
- The final product does not require solvent removal. Analytical methods or other patents require separating the solvent so that the final product is not toxic or harmful for its application.

In other main aspect of the invention, the extract obtained from the process of the invention is contemplated. The product thus obtained is a liquid biopesticide extract rich in compounds with biopesticide activity of natural origin.

The biopesticide compounds of interest are preferably selected from fatty acids, including lauric acid (C12:0), palmitic acid (C16:0), linolenic acid (18:3 n-3), oleic acid (C18:1) and stearic acid (C18:0), which have potential uses as antibiotics and as antifungal agents; also terpenes (some halogenated), with bactericidal, antioxidant, antimalarial, insecticidal and cytotoxic properties, polyphenols, polysaccharides, pigments such as chlorophyll and carotenoids, organic acids such as propanoic acid and butanoic acid, and other compounds such as Laxaficin A, Laxaficin B, Anatoxin - A, Eremofilone, Ambigol A, Ambigol B, Ambiguin Isonitrile, Pahayokolides, Microcystin and Cryptophycin).

Another main aspect of the invention contemplates a formulation with biopesticide activity that comprises the extract obtained by means of the process of the invention.

In a particular embodiment, the formulation comprises a dilution of the extract between 10% and 40%, a wetting compound, and demineralized water until reaching the final volume of the formulation.

The wetting agent used in the formulation of the final product can be selected from among propylene glycol, sodium lauryl ether sulfate, and ethoxylated alcohol, or any other analogous agent with similar physical-chemical properties. Preferably, ethoxylated alcohol is used at a concentration of between 2 and 20%.

Finally, another main aspect of the invention contemplates the use of the extract obtained as a biopesticide in agriculture, preferably by foliar application or fertigation in crops, using the extract in diluted form at a concentration between 0.2 g/L and 6.0 g/L.

The invention is described below based on an embodiment thereof.

### EXAMPLE

From the microalgae and/or cyanobacteria biomass production systems, a culture of microalgae and cyanobacteria biomass was harvested in continuous mode, containing the biomass at an approximate concentration of 1g/L, concentrating the biomass continuously up to 140 g/L by means of a series nozzle centrifuge system. Next, the concentrated biomass was transferred to a high-pressure homogenization system where the biomass was broken under a moderate working pressure of 1·10⁸ Pascals. Subsequently, the concentrated and homogenized biomass was transferred to a 500 L stirred tank reactor where the extraction process took place in a semi-continuous mode, under controlled temperature conditions, using adequate volumes of biocompatible solvents.

In this example, acetone was used as extracting solvent at a concentration of 10 ml per g equivalent of biomass. The extraction process was carried out adjusting the stirring at 50 rpm, at a temperature of 60 °C, keeping stirring for 0.6 hours.

Subsequently, the residual biomass of the extract containing the compounds with biopesticide activity was separated. For this, the extraction volume was subjected to continuous centrifugation using a chamber and disc centrifuge. The extraction process in semi-continuous mode was repeated in batches until the total processing of the available concentrated and homogenized biomass was obtained.

From the extract concentrated in biopesticide compounds obtained, the final product was formulated. The final formulation was obtained by means of a 12% dilution of the extract obtained, and ethoxylated alcohol as a wetting compound, at a concentration of 2%, completing it with demineralized water to the final volume.

## Claims

1. Procedure for obtaining, at an industrial level, an extract concentrated in biopesticide compounds, from microalgae and/or cyanobacteria, which comprises the following steps:
i) Providing a biomass of microalgae and/or cyanobacteria,
ii) Concentrating or resuspending the biomass provided in step i) in a liquid medium until reaching a solids concentration between 60 and 200 g/L,
iii) Releasing the cell content of the biomass obtained in step ii) by high-pressure homogenization, operated at a moderate pressure, between 7.10⁷ and 1 ·10⁸ Pa, for an optimized time,
iv) Extracting the biopesticide components released in step iii) in a stirred tank, using a mixture of an organic solvent, with a polarity between 0 and 9, and water, with a solvent concentration between 3 and 44% (v/v), at an agitation between 50 and 150 rpm, for a time between 0.5 and 6 hours, and at a temperature between 20 °C and 65 °C, and
v) Separating by physical means the extract containing the biopesticide components obtained in step iv).

2. Procedure according to claim 1, wherein the biomass provided in step i) is wet biomass.

3. Procedure according to claim 2, wherein the concentration of the wet biomass in step ii) is carried out by means of centrifugation or membrane filtration.

4. Procedure according to claim 2 or 3, wherein additionally the wet biomass is pre-concentrated by means of sedimentation or flocculation.

5. Procedure according to claim 4, wherein the wet biomass is pre-concentrated by sedimentation to a solids concentration of between 10 and 40 g/L.

6. Procedure according to claim 4, wherein the wet biomass is pre-concentrated by adding a flocculating agent at a concentration of between 0.1 and 20% (w/v).

7. Procedure according to any of the preceding claims, wherein the organic solvent used in step iv) has a polarity index between 3.9 and 7.2.

8. Procedure according to claim 7, wherein the solvent is selected from the group consisting of acetone, acetonitrile, ethylene glycol, isopropanol, methanol, methyl ethyl ketone, nitromethane or tetrahydrofuran or combinations thereof.

9. Concentrated extract with biopesticide activity obtained according to the procedure of claims 1 to 8.

10. Formulation with biopesticide activity comprising the extract of claim 9.

11. Formulation, according to claim 10, comprising a dilution of the extract of between 10% and 40%, a wetting compound, and demineralized water until reaching the final volume.

12. Formulation, according to claim 11, wherein the wetting agent used is ethoxylated alcohol at a concentration between 2 and 20%.

13. Use of an extract, according to claim 9, or a formulation, according to claim 10, as a biopesticide in agriculture.
